# EUROPÄISCHE PATENTSCHRIFT

(11) **EP 3 111 880 B1**
(45) Veröffentlichungstag und Bekanntmachung des Hinweises auf die Patenterteilung: **27.03.2019**
(21) Anmeldenummer: 15175019.7
(22) Anmeldetag: 02.07.2015
(51) Int. Cl.: A61C 5/62, A61C 5/66

(54) **INJEKTIONSVORRICHTUNG**
INJECTION DEVICE
DISPOSITIF D'INJECTION

(43) Veröffentlichungstag der Anmeldung: 04.01.2017
(73) Patentinhaber: Ivoclar Vivadent AG, 9494 Schaan (LI)
(72) Erfinder: George, Reinhard, 9426 Lutzenberg (CH); Kögel, Nora Christina, 80802 München (DE)
(74) Vertreter: Baronetzky, Klaus

(56) Entgegenhaltungen:
- US-A- 6 047 864
- US-A1- 2010 222 921
- US-B1- 6 312 254
- US-B1- 6 631 829

## Beschreibung

Die Erfindung betrifft eine Injektionsvorrichtung, gemäß dem Obebegriff von Anspruch 1.

Eine derartige Injektionsvorrichtung ist seit längerem bekannt, beispielsweise aus der DE 1 99 45 706 B1. Eine derartige Injektionsvorrichtung umfasst einen Injektor, der in Pistolenform ausgebildet sein kann, wie gemäß der genannten Druckschrift, oder aber auch in Stiftform, wozu beispielhaft auf die DE 1 96 18 544 C1 zu verweisen ist. Der Injektor hat die Aufgabe, das in der Patrone befindliche Dentalmaterial auszudrücken, damit der Zahnarzt das Dentalmaterial an der gewünschten Stelle applizieren kann. Hierzu ist ein Stempel oder Kolben vorgesehen, der in die Patrone eindringen kann und dort einen Außendurchmesser hat, der dem Innendurchmesser der Patrone entspricht, so dass das Dentalmaterial ausgedrückt werden kann.

Die US6631829 offenbart auch eine derartige Injektionsvorrichtung.

Der Injektor ist im Vergleich zu der Patrone groß. Für die Kraftübertragung auf den Kolben wird meist ein zweiarmiger Hebel mit einem Kraftübertragungsverhältnis von beispielsweise 5:1 verwendet, so dass die fünffache Handkraft auf den Kolben ausgeübt wird. Diese Kraft muss von der Patrone aufgenommen werden. Hierzu ist ein stabiler Kragen am rückwärtigen Ende der Patrone vorgesehen und erforderlich. Dieser liegt an einem Haltevorsprung des Injektors an, der die Kraft des Kragens auf den Injektor übertragen soll.

Um eine ausreichende Kraftübertragungsfläche zu bieten, erstreckt sich der Hatlevorsprung - gemäß der DE 1 99 45 706 B1 - über den gesamten Umfang der Patrone und deckt diese dort vollständig ab. In einer modifizierten Ausgestaltung erstreckt er sich über z. B. 240° der Patrone, so dass sie von unten zur Anlage an einem Führungselement in den Injektor eingedrückt werden kann. Auch dann wird ein erheblicher Teil der Patrone ebenfalls von dem Injektor abgedeckt.

Es sind zahlreiche verschiedene Patronen mit unterschiedlichen Dentalmaterialien verfügbar. Dies bezieht sich nicht nur auf die Farbe, sondern insbesondere auch auf das Material. Lichthärtende Dentalmaterialien haben hinsichtlich ihrer empfohlenen Aushärtzeit und Lichtintensität deutliche Unterschiede. Die Patronen sind daher entsprechend beschriftet, wobei der zur Verfügung stehende Platz für die empfohlene Aushärtzeit und Lichtintensität meist nicht ausreicht, nachdem die Patrone typischerweise einen Durchmesser von lediglich 6mm hat.

Im in den Injektor eingesetzten Zustand ist praktisch nicht prüfbar, welche Patrone gerade eingesetzt ist, nachdem diese von dem Führungselement und dem Haltevorsprung des Injektors mindestens überwiegend abgedeckt ist.

Typischerweise sind die Patronen schwarz, damit kein Fremdlicht zur vorzeitigen Aushärtung führt, so dass sie nicht von der Farbe her ohne weiteres unterscheidbar sind; vielmehr muss die Patrone aus dem Injektor entnommen und genau betrachtet werden, um die Weiterbearbeitung vorzunehmen.

In der Hektik des Zahnarztalltages ist es nicht ausgeschlossen, dass es zu Verwechslungen kommt, was nicht nur zu Schadensersatzansprüchen gegenüber dem Zahnarzt führen kann, sondern auch zu der Gefahr, dass aufgrund unvollständiger Aushärtung ein Monomeranteil in dem Dentalmaterial verbleibt. In der Literatur wird teilweise angegeben, dass die dann verbleibenden freien Radikalen mindestens begrenzt karzinogen seien.

Daher liegt der Erfindung die Aufgabe zugrunde, eine Injektionsvorrichtung gemäß dem Oberbegriff von Anspruch 1 zu schaffen, die eine ergonomisch günstige und insbesondere auch sicherere Handhabung ermöglicht, ohne dass ein besonderer Zusatzaufwand erforderlich wäre.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es zunächst, dass die in großem Umfang einzusetzenden Patronen, die erfindungsgemäß mit einer Kodierung versehen sind, exakt zu den gleichen Herstellkosten herstellbar sind wie die bislang realisierten Patronen. Es wird kurzerhand zusätzlich zu dem in Kurzform aufgedruckten Herstellercode und dem verwendeten Material sowie dessen Farbe ein Code auf der Patrone angebracht, der maschinenlesbar ist. Der Code kann beispielsweise ein Strichcode, ein QR-Code oder ein beliebiger anderer maschinenlesbarer Code sein. Auch ist es möglich, durch Prägungen oder entsprechendes erhabenes Aufdrucken einen Code nach der Art der Braille-Schrift einzusetzen.

Erfindungsgemäß ist nun der Injektor im Bereich des Führungselements, bevorzugt dem Haltevorsprung benachbart, mit einem Sensor ausgerüstet, der an der Stelle auf die Patrone gerichtet ist, an welcher der Code aufgebracht ist. Dies bezieht sich auf die axiale Länge bzw. axiale Richtung der Patrone. Der Code ist umlaufend oder mindestens teilweise auch umlaufend aufgedruckt, denn die Drehposition der Patrone in dem Führungselement sollte nach Möglichkeit nach Belieben des Zahnarzt gewählt werden können, insbesondere dann, wenn die Auslasstülle der Patrone abgekröpft verläuft. Durch den umlaufenden Code ist sichergestellt, dass mindestens ein Teilbereich des Codes für das Auslesen über den Sensor zur Verfügung steht, auch wenn die Drehposition der Patrone geändert wird.

Das Ausgangssignal des Sensors wird erfindungsgemäß einer Anzeigevorrichtung zugeleitet, in bevorzugter Ausgestaltung über eine Steuervorrichtung. Die Anzeigevorrichtung gibt in lesbarer Form wieder, in welcher Weise das Dentalmaterial mit Licht beaufschlagt werden soll, also welche empfohlene Aushärtzeit und welche Lichtintensität erwünscht ist. Außerdem werden weitere geeignete Informationen auf der Anzeigevorrichtung dargestellt, wie beispielsweise die Farbe des Dentalmaterials, der Name des Dentalmaterials, die Viskosität - Flow oder nicht-, oder aber auch das Haltbarkeitsdatum.

Hierzu ist die Anzeigevorrichtung auf dem Rücken des Injektors oberhalb des Handgriffs des Injektors angebracht, bevorzugt leicht schräg geneigt, um die Ablesbarkeit zu verbessern. Die Breite der Anzeigevorrichtung ist an die - schlanke - Breite des Injektors angebracht. Wenn der Injektor beispielsweise eine Breite von 23mm aufweist, lässt sich bei entsprechend kompakter Realisierung eine Breite der Anzeigevorrichtung von 20mm realisieren. Die Höhe kann beispielsweise 40mm betragen, so dass durchaus recht viele Informationen auf dem Display, das dann eine Fläche von 8cm² hat, dargestellt werden können.

Bei Verwendung eines Farbdisplays ist es auch beispielsweise möglich, den Hintergrund des Displays kurzerhand in der Farbe des Dentalmaterials zu hinterlegen, um die Farbe kompakt zu signalisieren.

Als Dentalmaterial können beliebige geeignete Materialien eingesetzt werden, bevorzugt Komposit, aber auch lichthärtbare Polymere, Füllmaterialien, Zahnzemente, andere Adhäsive oder beliebige andere viskose Dentalmaterialien, die in Patronenform applizierbar sind.

Erfindungsgemäß besonders günstig ist es, dass auf dem Display oder der Anzeigevorrichtung auf nicht selbsterklärende Abkürzungen verzichtet werden kann, nachdem die Anzeigefläche beispielsweise das Zehnfache der bedruckbaren Fläche der Patrone betragen kann.

Erfindungsgemäß kommt es daher nicht mehr zu Verwechslungen, und die Arbeitsabläufe in der Zahnarztpraxis sind mit der Erfindung erheblich sicherer.

In vorteilhafter Ausgestaltung ist es vorgesehen, den Sensor länglich entlang der Längserstreckung der Patrone auszubilden und ihn mit einer beispielsweise kapazitiven Füllstandsanzeige zu kombinieren. Mit dieser Lösung lässt sich die ausgedrückte Menge des Dentalmaterials, aber auch die zur Verfügung stehende Restmenge des Dentalmaterials ebenfalls auf der Anzeigevorrichtung anzeigen.

In einer weiteren bevorzugten Ausgestaltung ist es vorgesehen, die Anzeigevorrichtung, die Steuervorrichtung und den Sensor als herausziehbaren Einschub in den Injektor vorzusehen. Für das Autoklavieren des Injektors lässt sich dieser Einsatz herausziehen.

Besonders günstig ist es auch, dass der Zahnarzt bei gleichartigen Injektoren, die je mit unterschiedlichen Patronen bestückt sind, durch einen Blick auf die Anzeigevorrichtung ohne weiteres eine Unterscheidung vornehmen kann, so dass Verwechslungen ausgeschlossen sind.

Weitere Vorteile, Einzelheiten und Merkmale lassen sich der nachfolgenden Beschreibung zweier Ausführungsbeispiele der Erfindung entnehmen.

Es zeigen:
- Fig. 1: eine schematische Ansicht einer Ausführungsform einer erfindungsgemäßen Injektionsvorrichtung; und
- Fig. 2: eine vergrößerte Darstellung eines Details einer erfindungsgemäßen Injektionsvorrichtung in einer modifizierten Ausführungsform.

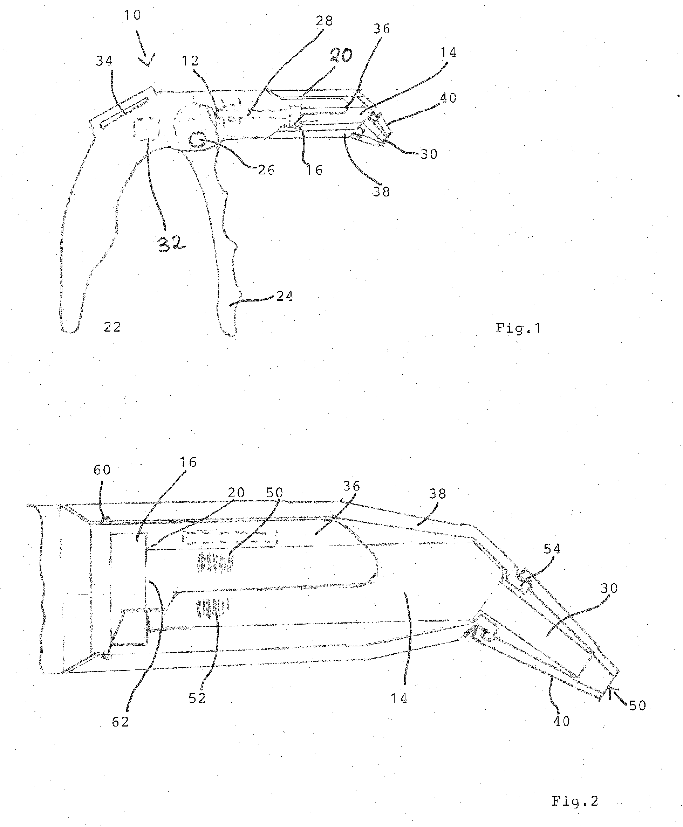

Die in Fig. 1 dargestellte Injektionsvorrichtung 10 weist einen Injektor 12 und eine Patrone 14 auf. Die Patrone 14 ist in den Injektor 12 eingesetzt. Sie weist in ihrem rückwärtigen Bereich einen Kragen 16 auf, der kreisringförmig verläuft. Er liegt - in Ausdruckrichtung betrachtet - an einem inneren Haltevorsprung 20 des Injektors 12 an, der einen Anschlag gegen den Kragen 16 bildet.

Der Injektor 12 weist in an sich bekannter Weise einen Handgriff 22 auf, und einen Betätigungshebel 24. Der Betätigungshebel 24 ist an einer Achse 26 an dem Injektor 12 im übrigen gelagert. Er ist fingerfreundlich gestaltet, und durch Zug an dem Betätigungshebel 24 in Richtung Handgriff 22 wird über diesen ein Kolben 28 innen in dem Injektor 12 zur Patrone 14 hin bewegt.

Der Kolben 28 passt in die Patrone und dient dazu, das dort befindliche Dentalmaterial dann auszudrücken.

Die Patrone 14 weist ferner eine Auslasstülle 30 auf, die sich schräg zur Achse 26 der Patrone 14 erstreckt und einen dünneren Durchmesser als die Patrone 14 aufweist.

Erfindungsgemäß ist die Patrone 14 mit einem aus Fig. 2 ersichtlichen Code 52 versehen. Dieser wird von einem ebenfalls aus Fig. 2 ersichtlichen Sensor 50 erfasst. Das Ausgangssignal des Sensors 50 wird einer Steuervorrichtung 32 zugeleitet und dort aufbereitet. Eine Anzeigevorrichtung 34 gibt detaillierte Informationen über die Patrone 14 in lesbarer Form wieder.

Hierzu ist die Anzeigevorrichtung 34 oberhalb des Handgriffs 22 im rückwärtigen Bereich des Injektors 12 gelagert, und zwar leicht schräg stehend, so dass sie gut im Blick des Benutzers liegt.

Bei der Ausführungsform gemäß Fig. 1 ist den Haltevorsprung 20 und das Führungselement 36, an dem die Patrone 14 anliegt, umgebend eine Drehhülse 38 vorgesehen, die sich in der Verlängerung des Laufs des Injektors 12 die Patrone 14 überlappend nach vorne erstreckt.

Die Drehhülse 38 endet in einer Auslassöffnung, die von der Auslasstülle 30 durchtreten ist. Die Normale der Auslassöffnung ist parallel zur Achse der Auslasstülle 30.

Zusätzlich ist die Auslassöffnung der Drehhülse 38 von einer Wechselkappe 40 abgedeckt. Diese weist eine Auslassöffnung auf, durch die Dentalmaterial, das aus der Auslasstülle 30 austritt, hindurchtritt und dem Behandlungsort zugeleitet wird.

Erfindungsgemäß besonders günstig ist es, dass die Patrone 14 vollständig von der Drehhülse 38 und der Wechselkappe 40 abgedeckt ist. Hierdurch ist sichergestellt, dass kein Kontakt zwischen dem Patienten und der Patrone 14 entstehen kann.

Während bislang die Patronen aufgrund des darin befindlichen und empfindlichen Dentalmaterials nicht autoklavierbar waren, so dass vorschriftsgemäß lediglich eine einmalige Verwendung der Patronen möglich ist, ist es nun erfindungsgemäß besonders günstig, dass die Patronen 14 für mehrere Patienten eingesetzt werden können.

Hierzu ist die Drehhülse 38 zusammen mit der Wechselkappe 40 von dem Injektor 12 entfernbar, und zwar während die Patrone 14 in dem Injektor eingesetzt ist. Die Drehhülse 38 ist aus einem etwas elastischen Material, das aber dennoch temperaturbeständig ist, so dass sie zusammen mit der Wechselkappe 40 autoklavierbar ist.

Für die erneute Anwendung der erfindungsgemäßen Injektionsvorrichtung wird daher die Drehhülse über die Patrone 14 gestülpt und auf den Schaft des Injektors 12 aufgeschoben, bis sie einrastet. Hieran anschließend wird die Wechselkappe 40 auf die Lagerung an der Drehhülse 38 aufgeschoben und dort eingerastet. Die Wechselkappe 40 und die Drehhülse 38 sind beide bei üblicher Betätigung - mit einem entsprechendem Sicherheitsabstand - nicht versehentlich lösbar.

Wenn lediglich die Wechselkappe 40 mit dem Mund des Patienten in Anlage gerät, ist es auch möglich, lediglich diese abzuziehen und zu autoklavieren.

Die Erfindung ist in Fig. 2 dargestellt. Dort ist unter anderem ersichtlich, in welcher Weise ein Sensor 50 sich an dem Führungselement 36 innen entlang der Patrone 14 erstreckt. Der Sensor 50 erfasst jedenfalls den Code 52, der mindestens teilweise am Umfang der Patrone 14 angebracht ist. Die Patrone ist gegenüber dem Haltevorsprung 20 und dem Führungselement 36 um ihre Achse drehbar. Die Anbringung des Codes und des Sensors 50 ist so gewählt, dass unabhängig von der Drehposition von der Patrone 14 stets ein Teil des Codes von dem Sensor 50 gelesen werden kann.

In dem Ausführungsbeispiel gemäß Fig. 2 ist die Drehhülse 38 im vorderen Bereich noch enger an die Patrone 14 herangeführt. Hierzu ist sie dort konisch ausgebildet. Wie ersichtlich ist, endet sie in einem Auslassstutzen 52, der einen Ringvorsprung aufweist, auf welchem die Wechselkappe 40 aufschnappbar ist. Die Wechselkappe 40 umgibt die Auslasstülle 30 vollständig und erstreckt sich über diese hinaus. Sie ist ebenfalls konisch ausgebildet, so dass der Enddurchmesser am vorderen Ende der Wechselkappe 40 im wesentlichen dem Enddurchmesser der Auslasstülle 30. Die Auslassöffnung 56 der Wechselkappe 40 weist dementsprechend einen Innendurchmesser auf, der im wesentlichen dem Innendurchmesser der Auslasstülle 30 entspricht.

Das Führungselement 36 erstreckt sich über einen wesentlichen Teil der Patrone 14. Er erstreckt sich in dem dargestellten Ausführungsbeispiel in Vorderansicht betrachtet teilkreisförmig über etwas mehr als 180°, beispielsweise 200° oder 240°. Das Führungselement 36 ist nach unten hin offen. Damit lässt sich die Patrone 14 aufgrund der gewissen Elastizität des Führungselement 36 in die Arbeitsposition gemäß Fig. 2 einschnappen und ist dort unverlierbar gehalten.

Insofern bildet das Führungselement 36 eine Klemmvorrichtung 62 für die Patrone 14, deren beide Klemmfinger die Patrone 14 übergreifen und festhalten.

Aufgrund der klemmenden Anlage ist auch eine exakte Positionierung zwischen Code 52 und Sensor 50 möglich.

In weiterer vorteilhalfter Ausgestaltung ist es vorgesehen, dass der Betätigungshebel 24 zusätzlich zu dem Kolben 28 einen kleinen Generator antreibt, der einen Akkumulator für die Speisung der Anzeigevorrichtung und der Steuervorrichtung speist.

In weiterer günstiger Ausgestaltung ist ein Mikroschalter an dem Betätigungshebel 24 vorgesehen, der dafür sorgt, dass die Spannungsvorsorgung lediglich dann eingeschaltet wird, wenn der Betätigungshebel leicht betätigt wird, beispielweise um 5mm. Diese Ausführung ermöglicht eine stromsparende Handhabung, und sobald der Zahnarzt die Injektionsvorrichtung in die Hand nimmt und damit leicht auf den Betätigungshebel drückt, wird die erfindungsgemäße Steuervorrichtung 32 mit der Anzeigevorrichtung 34 und dem Sensor 50 aktiviert, und die relevanten Informationen und Parameter zu dem Dentalmaterial werden dargestellt.

Der Sensor 50 erfasst sämtliche Informationen, die in dem Code 52 enthalten sind. Typischerweise wird daher mindestens ein Parameter der Patrone und dementsprechend des darin befindlichen Dentalmaterials auf der Anzeigevorrichtung 34 wiedergegeben. Es ist auch möglich, die Informationen und Parameter, die angezeigt werden sollen, vorab einzustellen, je nach Wunsch des Zahnarztes.

Aus Fig. 2 ist auch ersichtlich, dass endseitig der Drehhülse 38 an dem Schaft des Injektors 12 ein Ringvorsprung 60 ausgebildet ist. Dieser schnappt in einer entsprechenden Nut in der Drehhülse 38 ein, ohne die Drehbarkeit der Drehhülse 38 zu beeinträchtigen.

## Patentansprüche

1. Injektionsvorrichtung, mit einem Injektor (12) und einer in den Injektor (12) einsetzbaren oder an ihn ansetzbaren Patrone (14) mit Dentalmaterial, welcher Injektor (12) einen Kolben (28) aufweist, der dafür bestimmt ist, unter Eindringen in die Patrone (14) das Dentalmaterial aus der Patrone (14) auszudrücken, mit einem Kragen (16) der Patrone (14), der dafür bestimmt ist, an einem Haltevorsprung (20) des Injektors (12) anzuliegen, welcher Haltevorsprung (20) an einem Führungselement (36) des Injektors (12) ausgebildet ist, wobei das Führungselement (36), welches sich über einen wesentlichen Teil der Patrone (14) erstreckt, einen Sensor (50) aufweist, der sich an dem Frührungselement (36) innen entlang der Patrone (14) erstreckt, um einen Code (52), der auf oder an der Patrone (14) mindestens teilweise umlaufend angebracht ist, zu erfassen, wobei unabhängig von der Drehposition der Patrone in oder an dem Führungselement stets ein vollständiger Code (52) für den Sensor (50) lesbar ist, und wobei der Injektor (12) an einem von dem Haltevorsprung (20) beabstandeten Bereich eine Anzeigevorrichtung aufweist, welche basierend auf dem Ausgangssignal des Sensors (50), das basierend auf den Code (52) der Patrone (14) erzeugt ist, mindestens einen Parameter der Patrone (14) und/oder des darin befindlichen Dentalmaterials wiedergibt.

2. Injektionsvorrichtung nach Anspruch 1, **dadurch gekennzeichnet, dass** der Code (52) maschinenlesbar auf der Patrone (14) angebracht ist und sich mindestens teilweise kreisringförmig um die Patrone (14) herum erstreckt, und dass die Anzeigevorrichtung im rückwärtigen Bereich des Injektors (12) an der Oberseite oder schräg an der Oberseite angeordnet ist.

3. Injektionsvorrichtung nach einem der vorhergehenden Ansprüche, **dadurch gekennzeichnet, dass** das Führungselement (36) eine Klemmvorrichtung aufweist, die insbesondere zwei einander gegenüberliegende und die Patrone (14) teilweise übergreifende Klemmfinger aufweist, und dass die Klemmvorrichtung die Patrone (14) in Anlage an dem Führungselement (36) klemmend hält.

4. Injektionsvorrichtung nach einem der vorhergehenden Ansprüche, **dadurch gekennzeichnet, dass** die Patrone (14) eine schräg oder abgekröpft verlaufende Auslasstülle (30) aufweist, durch welche hindurch das Dentalmaterial ausdrückbar ist.

5. Injektionsvorrichtung nach einem der vorhergehenden Ansprüche, **dadurch gekennzeichnet, dass** die Injektionsvorrichtung (10) im wesentlichen pistolenförmig mit einem Handgriff (22) ausgebildet ist, demgegenüber ein Betätigungshebel (24) angeordnet ist, der nach der Art eines zweiarmigen Hebels unter Kraftübersetzung und Weguntersetzung auf den Kolben (28) wirkt.

6. Injektionsvorrichtung nach einem der vorhergehenden Ansprüche, **dadurch gekennzeichnet, dass** der Injektor (12) eine Steuervorrichtung (32) aufweist, die das Ausgangssignal des Sensors (50) verarbeitet und die Anzeigevorrichtung zur Darstellung von lesbaren Zeichen und/oder Symbolen ansteuert.

7. Injektionsvorrichtung nach einem der vorhergehenden Ansprüche, **dadurch gekennzeichnet, dass** der Injektor (12) einen Betätigungshebel (24) aufweist, der über ein Getriebe auf den Kolben (28) wirkt, und der insbesondere einen Generator für die Speisung einer wiederaufladbaren Batterie in dem Injektor (12) antreibt.

8. Injektionsvorrichtung nach einem der vorhergehenden Ansprüche, **dadurch gekennzeichnet, dass** der injektor (12) einen Betätigungshebel (24) aufweist, der auf einen Schaltkontakt wirkt, welcher Schaltkontakt die Anzeigevorrichtung und den Sensor (50) mit Spannung aus einer Batterie versorgt.

9. Injektionsvorrichtung nach einem der vorhergehenden Ansprüche, **dadurch gekennzeichnet, dass** das Führungselement (36) und die Patrone (14) in einer Drehhülse (38) aufgenommen sind, die drehbar auf dem Injektor gelagert ist und die sich im wesentlichen achsparallel zu der Patrone (14) erstreckt.

10. Injektionsvorrichtung nach Anspruch 1, **dadurch gekennzeichnet, dass** die Drehhülse (38) einen Auslassstutzen aufweist, der sich schräg zur Achse (26) der Patrone (14) und im Wesentlichen in Richtung einer Auslasstülle der Patrone (14) erstreckt.

11. Injektionsvorrichtung nach einem der Ansprüche 9 oder 10, **dadurch gekennzeichnet, dass** die Drehhülse (38) einen Anschluss für eine Wechselkappe (40) aufweist, die an einem Auslassstutzen der Drehhülse (38) gelagert ist und die sich um die Auslasstülle der Patrone (14) herum und über diese hinaus erstreckt.

12. Injektionsvorrichtung nach Anspruch 11, **dadurch gekennzeichnet, dass** die Wechselkappe (40) auf einen Auslassstutzen der Drehhülse (38) passt und eine Auslassöffnung aufweist, die im Wesentlichen den gleichen Durchmesser wie eine Auslassöffnung der Auslasstülle aufweist, mit einer Maximalabweichung von plus minus 30%, wobei die Wechselkappe (40) insbesondere konisch zulaufend ausgebildet ist.

13. Injektionsvorrichtung nach einem der Ansprüche 9 bis 12, **dadurch gekennzeichnet, dass** die Drehhülse (38) und/oder die Wechselkappe (40) auf dem Injektor (12) beziehungsweise den Auslassstutzen umgebend drehbeweglich gelagert sind und nach Überwindung einer Rastkraft abnehmbar sind.

14. Injektionsvorrichtung nach einem der Ansprüche 9 bis 13, **dadurch gekennzeichnet, dass** die Drehhülse (38) und/oder die Wechselkappe (40) aus einem autoklavierbarem Material bestehen, das eine Temperaturbeständigkeit von 150°C oder mehr aufweist und insbesondere aus einem Material, das weicher und elastischer ist als das Material der Patrone (14) und/oder des Injektors (12) im übrigen.

15. Injektionsvorrichtung nach einem der Ansprüche 9 bis 14, dadurch gekennezeichnet, dass die Drehhülse (38) einen zylinderförmigen Abschnitt im Bereich des Führungselements (36) aufweist und zu dem Auslassstutzen hin im Wesentlichen konisch zuläuft.

## Claims

1. An injection device having an injector (12) and a cartridge (14) of dental material replaceable or attachable to the injector (12), the injector (12) comprising a piston (28) adapted to push the dental material out of the cartridge (14) while penetrating into the cartridge (14), with a collar (16) of the cartridge (14), which Is intended to bear against a holding projection (20) of the injector (12), which holding projection (20) is formed on a guide element (36) of the injector (12), wherein the guide element (36), which extends across a substantial part of the cartridge (14), comprises a sensor (50), extending along the inside of the cartridge (14) on the guide member (36) for detecting a code (52), which is at least partially circumferential attached to or on the cartridge (14), wherein a complete code (52) for the sensor (50) is always readable regardless of the rotational position of the cartridge in or on the guide member, and wherein the injector (12) comprises a display device at a region spaced apart from the holding projection (20), which display device displays at least one parameter of the cartridge (14) and/or the dental material therein, based on the output signal of the sensor (50), which output signal is generated based on the code (52) of the cartridge (14).

2. The injection device according to Claim 1, **characterized in that** the code (52) is machine-readably mounted on the cartridge (14) and extends at least partially in a circular ring around the cartridge (14), and **In that** the display device Is arranged in the rear region of the injector (12) at the top or obliquely at the top.

3. The injection device according to one of the preceding Claims, **characterized in that** the guide element (36) comprises a clamping device, which in particular comprises two opposing clamping fingers, which partially overlap the cartridge (14), and **in that** the clamping device holds the cartridge (14) in contact with the guide element (36) In a clamping manner.

4. The injection device according to one of the preceding Claims, **characterized In that** the cartridge (14) comprises an oblique or cranked outlet spout (30) through which the dental material can be expelled.

5. The injection device according to one of the preceding Claims, **characterized in that** the injection device (10) is essentially pistol-shaped with a handle (22), opposite to which an actuating lever (24) Is arranged which acts on the piston (28) in the manner of a two-armed lever with force transmission and path reduction.

6. The injection device according to one of the preceding Claims, **characterized In that** the injector (12) comprises a control device (32) which processes the output signal of the sensor (50) and controls the display device to display legible characters and/or symbols.

7. The injection device according to one of the preceding Claims, **characterized in that** the Injector (12) comprises an operating lever (24) which acts on the piston (28) via a gearbox and which especially drives a generator for supplying a rechargeable battery in the injector (12).

8. The injection device according to one of the preceding Claims, **characterized In that** the injector (12) comprises an actuating lever (24) which is applied to a switching contact, which switching contact supplies the display device and the sensor (50) with voltage from a battery.

9. The injection device according to one of the preceding Claims, **characterized in that** the guide element (36) and the cartridge (14) are received in a rotary sleeve (38) which is rotatably mounted on the Injector and which extends substantially axially parallel to the cartridge (14).

10. The injection device according to Claim 1, **characterized in that** the rotary sleeve (38) comprises an outlet stub extending obliquely to the axis (26) of the cartridge (14) and substantially in the direction of an outlet stub of the cartridge (14).

11. The injection device according to either Claim 9 or 10, **characterized In that** the rotary sleeve (38) comprises a connection for an exchangeable cap (40) mounted on an outlet stub of the rotary sleeve (38) and extending around and beyond the outlet stub of the cartridge (14).

12. The injection device according to Claim 11, **characterized in that** the exchangeable cap (40) fits on an outlet stub of the rotating sleeve (38) and comprises an outlet opening which comprises substantially the same diameter as an outlet opening of the outlet stub, with a maximum deviation of plus minus 30%, wherein the exchangeable cap (40) especially is designed to taper.

13. The Injection device according to one of Claims 9 to 12, **characterized In that** the rotary sleeve (38) and/or the exchangeable cap (40) is mounted on the Injector (12) or the outlet stub in a rotationally movable manner and can be removed after overcoming a latching force.

14. The injection device according to one of Claims 9 to 13, **characterized In that** the rotary sleeve (38) and/or the exchangeable cap (40) consist of an autoclavable material which has a temperature resistance of 150°C or more and in particular of a material which is softer and more resilient than the material of the cartridge (14) and/or the injector (12) for the rest.

15. The injection device according to any one of Claims 9 to 14, **characterized in that** the rotary sleeve (38) comprises a cylindrical portion in the region of the guide element (36) and is substantially tapered towards the outlet stub.

## Revendications

1. Dispositif a injection, avec un injecteur (12) et une cartouche (14) avec du , matériau dentaire qui peut être Inséré dans l'injecteur (12) ou attaché sur celui-ci, ledit injecteur (12) présentant un piston (28), qui est prévu pour exprimer le matériau dentaire de la cartouche (14), lors de sa pénétration dans la cartouche (14), avec un col (16) de la cartouche (14), qui est prévu pour buter contre une saillie de retenue (20) de l'injecteur (12), ladite saillie de retenue (20) étant formé sur un élément de guidage (36) de l'injecteur (12), où l'élément de guidage (36) qui s'étend sur une partie substantielle de la cartouche (14), présente un capteur (50), qui s'étend à l'intérieur de l'élément de guidage (36) le long de la cartouche (14), pour la détection d'un code (52), qui est appliqué sur ou à la cartouche (14), au moins partiellement circulant, où indépendamment de la position rotative de la cartouche dans ou sur l'élément de guidage un code complet (52) est toujours lisible pour le capteur (50), et où l'injecteur (12) dispose d'un dispositif d'affichage, dans une zone espacée de la saillie de retenue (20), qui restitue en fonction du signal de sortie du capteur (50), qui est produite en fonction du code (52) de la cartouche (14), au moins un paramètre de la cartouche (14) et/ou du matériau dentaire qui se trouve dedans.

2. Dispositif d'Injection selon la revendication 1, **caractérisé en ce que** le code (52) est appliqué sur la cartouche (14) de manière à être lisible par machine et s'étend au moins partiellement en forme d'anneau circulaire autour de la cartouche (14) et que le dispositif d'affichage est disposé dans la zone arrière de l'injecteur (12) sur la face supérieure ou incliné sur la face supérieure.

3. Dispositif d'injection selon l'une des revendications précédentes, **caractérisé en ce que** l'élément de guidage (36) possède un dispositif de serrage, qui présente en particulier deux doigts de serrage, l'un en face de l'autre et recouvrant au moins partiellement la cartouche (14) et que le dispositif de serrage tient la cartouche (14) en appui serrée contre l'élément de guidage (36).

4. Dispositif d'injection selon l'une des revendications précédentes, **caractérisé en ce que** la cartouche (14) possède une buse d'évacuation (30) s'étendant de manière oblique ou coudée, à travers de laquelle le matériel dentaire peut être exprimé.

5. Dispositif d'injection selon l'une des revendications précédentes, **caractérisé en ce que** le dispositif d'injection (10) est essentiellement formé comme un pistolet avec une poignée (22), en face de laquelle un levier de commande (24) est disposé, qui agit sur le piston (28) à la manière d'un levier à deux bras, sous l'effet de la transmission des forces et de la démultiplication du trajet.

6. Dispositif d'injection selon l'une des revendications précédentes, **caractérisé en ce que** l'injecteur (12) dispose d'un dispositif de commande (32) qui traite le signal de sortie du capteur (50) et commande le dispositif d'affichage pour l'affichage de caractères et/ou de symboles lisibles.

7. Dispositif d'injection selon l'une des revendications précédentes, **caractérisé en ce que** l'Injecteur (12) présente un levier de commande (24), qui agit sur le piston (28) par le biais d'une transmission, et qui, en particulier commande un générateur pour l'alimentation d'une batterie rechargeable dans l'injecteur (12).

8. Dispositif d'injection selon l'une des revendications précédentes, **caractérisé en ce que** l'Injecteur (12) possède un levier de commande (24), qui agit sur un contact de commutation, où ledit contact de commutation alimente en tension le dispositif d'affichage et le capteur (50) par le biais d'une batterie.

9. Dispositif d'injection selon l'une des revendications précédentes, **caractérisé en ce que** l'élément de guidage (36) et la cartouche (14) sont accueillis dans une douille rotative (38), qui est logée sur l'injecteur de manière rotative et qui s'étend essentiellement parallèle à l'axe de la cartouche (14).

10. Dispositif d'injection selon la revendication 1, **caractérisé en ce que** la douille rotative (38) possède un conduit d'évacuation, qui s'étend à un angle par rapport à l'axe (26) de la cartouche (14) et essentiellement dans le sens d'une buse d'évacuation de la cartouche (14).

11. Dispositif d'injection selon l'une des revendications 9 ou 10, **caractérisé en ce que** la douille rotative (38) possède un raccord pour un capuchon amovible (40), qui est logé sur un conduit d'évacuation de la douille rotative (38) et s'étend autour de la buse d'évacuation de la cartouche (14) et au-delà de celle-ci.

12. Dispositif d'injection selon la revendication 11, **caractérisé en ce que** le capuchon amovible (40) tient sur un conduit d'évacuation de la douille rotative (38) et possède une ouverture d'évacuation, qui possède essentiellement le même diamètre que l'orifice de sortie de la buse d'évacuation, avec un écart maximal de plus ou moins 30%, où le capuchon amovible (40) est formé en particulier se terminant en forme conique.

13. Dispositif d'Injection selon l'une des revendications 9 à 12, **caractérisé en ce que** la douille rotative (38) et/ou le capuchon amovible (40) sont logés de manière rotative sur l'injecteur (12) ou le conduit d'évacuation respectivement et sont amovibles après avoir surmonté une force d'encliquetage.

14. Dispositif d'Injection selon l'une des revendications 9 à 13, **caractérisé en ce que** la douille rotative (38) et/ou le capuchon amovible (40) sont faits d'un matériau autoclavable qui possède une résistance à la température de 150° C ou plus et en particulier au demeurant d'un matériau qui est plus souple et plus élastique que le matériau de la cartouche (14) et/ou de l'injecteur (12).

15. Dispositif d'injection selon une des revendications 9 à 14, **caractérisé en ce que** la douille rotative (38) possède une section cylindrique dans la zone de l'élément de guidage (36) et qui s'effile essentiellement de forme conique vers le conduit d'évacuation.
